# EUROPÄISCHE PATENTSCHRIFT

(11) **EP 1 787 789 B1**
(45) Veröffentlichungstag und Bekanntmachung des Hinweises auf die Patenterteilung: **25.03.2009**
(21) Anmeldenummer: 06122905.0
(22) Anmeldetag: 25.10.2006
(51) Int. Cl.: B29C 67/00

(54) **Schichtweise arbeitendes Verfahren zur Herstellung von dreidimensionalen Bauteilen unter Verwendung von Polyesterpulver und durch das Verfahren hergestellter Formkörper**
Stereolithographic process for the fabrication of three-dimensional articles by using polyester powder and article obtained by said process
Procédé de moulage par stéréolithographie pour la fabrication d'objets tridimensionnels en utilisant une poudre de polyester et objet obtenu par ledit procédé

(30) Priorität: 17.11.2005 DE 102005054723
(43) Veröffentlichungstag der Anmeldung: 23.05.2007
(73) Patentinhaber: Evonik Degussa GmbH, 45128 Essen (DE)
(72) Erfinder: Simon, Ulrich, 44625 Herne (DE); Monsheimer, Sylvia, 45721 Haltern (DE); Grebe, Maik, 44805 Bochum (DE); Temme, Heinrich, 48249 Dülmen (DE)

(56) Entgegenhaltungen:
- EP-A- 1 400 340
- DE-A1-0102004 010 16
- DE-A1-2102004 010 16
- US-A1- 5 990 268

## Beschreibung

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet.

Die Erfindung betrifft die Verwendung eines Polyesterpulvers, welches aus einem zwei- oder mehrwertigen Alkohol und einer Dicarbonsäure und gleichzeitig unter Verzicht auf einen aromatischen Monomerbaustein hergestellt wurde, in formgebenden Verfahren, sowie Formkörper, hergestellt durch ein schichtweise arbeitendes Verfahren, mit welchem selektiv Bereiche einer Pulverschicht aufgeschmolzen werden, unter Verwendung dieses Pulvers. Nach Abkühlen und Verfestigen der zuvor Schicht für Schicht aufgeschmolzenen Bereiche kann der Formkörper dem Pulverbett entnommen werden.

Die Selektivität der schichtweise arbeitenden Verfahren kann dabei beispielsweise über den Auftrag von Suszeptoren, Absorbern, Inhibitoren oder durch Masken oder über fokussierte Energieeinbringung, wie beispielsweise durch einen Laserstrahl, oder über Glasfasern erfolgen. Der Energieeintrag wird über elektromagnetische Strahlung erreicht.

Im Folgenden werden einige Verfahren beschrieben, mit denen bei der erfindungsgemäßen Verwendung eines Polyesterpulvers erfindungsgemäße Formteile hergestellt werden können, ohne dass die Erfindung darauf beschränkt werden soll.

Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die PulverPartikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in den Patentschriften US 6 136 948 und WO 96/06881 (beide DTM Corporation) beschrieben. Eine Vielzahl von Polymeren und Copolymeren wird für diese Anwendung beansprucht, wie z. B. Polyacetat, Polypropylen, Polyethylen, lonomere und Polyamid.

Andere gut geeignete Verfahren sind das SIV-Verfahren, wie in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.

Für die genannten Rapid-Prototyping- bzw. Rapid-Manufacturing-Verfahren (RP- oder RM-Verfahren) können pulverförmige Substrate, insbesondere Polymere, vorzugsweise ausgewählt aus Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), lonomer, Polyamid, oder Gemische davon eingesetzt werden.

In WO 95/11006 wird ein für das Lasersintern geeignetes Polymerpulver beschrieben, das bei der Bestimmung des Schmelzverhaltens durch Differential Scanning Calorimetry bei einer Scanning rate von 10 bis 20 °C/min keine Überlappung des Schmelze- und Rekristallisationspeaks zeigt, einen ebenfalls durch DSC bestimmten Kristallinitätsgrad von 10 bis 90 % aufweist, ein zahlenmäßiges Mittel des Molekulargewichts Mn von 30 000 bis 500 000 hat und dessen Quotient Mw/Mn im Bereich von 1 bis 5 liegt.

DE 197 47 309 beschreibt die Verwendung eines Polyamid-12-Pulvers mit erhöhter Schmelztemperatur und erhöhter Schmelzenthalpie, welches durch Umfällung eines zuvor durch Ringöffnung und anschließende Polykondensation von Laurinlactam hergestellten Polyamids erhalten wird. Es handelt sich dabei um ein Polyamid 12.

In DE 10 2004 010 160 A1, welche ein Verfahren gemäß dem Oberbegriff des Anspruchs 1 beschreibt, wird die Verwendung von Polymerpulver mit Copolymer in formgebenden Verfahren beschrieben. Es handelt sich dabei um thermoplastische statistische Copolymere aus den unterschiedlichsten Monomerbausteinen, wobei der Schwerpunkt auf laurinlactambasierenden Sytemen liegt. Für Copolyester werden beispielhaft Monomere genannt, ohne auf spezielle Zusammensetzungen einzugehen. Die Copolymere weisen einen MFR-Wert zwischen 1 und 10 g/10 min auf.

Nachteilig ist bei der Verarbeitung, dass zur Vermeidung des sogenannten Curls die Temperatur in dem Bauraum bzw. Baukammer möglichst gleichmäßig auf einem Niveau knapp unterhalb des Schmelzpunktes des polymeren Werkstoffes gehalten werden muss. Bei amorphen Polymeren ist damit eine Temperatur knapp unterhalb der Glasübergangstemperatur gemeint, bei teilkristallinen Polymeren eine Temperatur knapp unterhalb des Kristallitschmelzpunktes. Mit Curl ist ein Verzug des bereits aufgeschmolzenen Bereiches gemeint, der ein zumindest teilweises Herausragen aus der Bauebene bewirkt. Es besteht damit die Gefahr, dass beim Auftrag der nächsten Pulverschicht, beispielsweise durch einen Rakel oder eine Walze, die herausragenden Bereiche verschoben oder sogar ganz herausgerissen werden. Das hat für den Prozess zur Folge, dass die Bauraumtemperatur insgesamt auf einem relativ hohen Niveau gehalten werden muss, und dass die durch Abkühlen und durch Kristallisation bedingte Volumenänderung der mit solchen Verfahren hergestellten Formkörpern erheblich ist. Nicht zuletzt wird durch den Abkühlprozess eine gerade für die "Rapid"-Verfahren nicht unerhebliche Zeitspanne benötigt.

Ein weiterer Nachteil der teilkristallinen Thermoplaste ist in vielen Fällen ihre Kristallinität, bzw. die dadurch verursachte Änderung des Volumens während des Abkühlens aus der Schmelze heraus. Es besteht zwar die Möglichkeit, durch eine sehr aufwendige und genaue Temperaturführung die Volumenänderung durch Kristallinität einer einzelnen Schicht weitgehend zu vergleichmäßigen, jedoch ist die kristallisationsbedingte Volumenänderung beliebig aufgebauter dreidimensionaler Formkörper über den Formkörper nicht gleichmäßig. Beispielsweise hängt die Ausbildung kristalliner Strukturen von der Abkühlgeschwindigkeit des Formkörpers ab, die an unterschiedlich dicken Stellen oder an verwinkelten Stellen anders ist als an anderen Stellen des Formkörpers.

Ein Nachteil der amorphen Thermoplaste ist die hohe Viskosität, die nur deutlich oberhalb des Schmelzpunktes bzw. der Glasübergangstemperatur ein Zusammenfließen ermöglicht. Häufig sind mit amorphen Thermoplasten nach obigen Verfahren hergestellte Formkörper daher relativ porös; es werden lediglich Sinterhälse ausgebildet, und die einzelnen Pulverpartikel sind im Formkörper noch erkennbar. Bei Erhöhung des Energieeintrages zur Viskositätsreduzierung kommt jedoch das Problem der Formtreue hinzu; beispielsweise durch Wärmeleitung von den aufzuschmelzenden in die umliegenden Bereiche werden die Konturen des Formkörpers unscharf.

Nachteilig an den bisher in der Literatur beschriebenen Copolymeren für die Verwendung in werkzeuglosen formgebenden Verfahren ist, daß durch die Zusammensetzung zwar eine Absenkung der Schmelzpunkte erreicht werden kann, was sich erleichternd auf die Verarbeitbarkeit auswirkt und auf den Schwund, und zwar durch Verwendung von zumindest einem aromatischen Monomerbaustein. Verursacht wird das durch eine verringerte Kristallinität, so daß nicht mehr der Kristallitschmelzpunkt den Übergang von fest nach flüssig beschreibt, sondern mehr und mehr der Glasübergang, wobei der Übergang fließend ist und von den Zusammensetzungen der Copolymere abhängt. Der aromatische Monomerbaustein kann beispielsweise Terephthalsäure oder Isophthalsäure sein. Im Gegenzug wird aber die Viskosität der Schmelze durch diese aromatischen Komponenten stark erhöht, was das Zusammenfließen der Pulverpartikel erschwert. Es muß also immer ein Kompromiß zwischen konkurrierenden Zieleigenschaften gefunden werden. Die zur Zeit hauptsächlich verwendeten Homopolymere weisen Schmelzpunkte oberhalb von 160 °C auf, wie beispielsweise Polyamid 12 (186 °C), Polyamid 11 (193 °C). Nachteilig dabei ist, daß vermehrt Curl auftritt bis hin zur Nichtverarbeitbarkeit, und daß die Anforderungen an die Maschine sehr viel höher sind, da die Temperatur im Baufeld möglichst homogen gehalten werden muß, und das auf einem Niveau knapp unterhalb des Schmelzpunktes des Polymeren.

Aufgabe der vorliegenden Erfindung war es deshalb, die Verwendung eines Polymerpulvers in formgebenden werkzeuglosen Verfahren zu ermöglichen, welches die widersprüchlichen Eigenschaften niedriger Schmelzpunkt und niedrige Viskosität vereinbart, wobei eine Absenkung des Molekulargewichtes nicht geeignet ist zur Einstellung der Viskosität, da diese Maßnahme zu sinkenden mechanischen Eigenschaften führen würde. Das Verarbeitungsverfahren ist dabei ein schichtweise arbeitendes Verfahren, bei dem selektiv Bereiche der jeweiligen Pulverschicht mittels elektromagnetischer Energie aufgeschmolzen werden und sich nach dem Abkühlen zu dem gewünschten Formkörper verbunden haben.

Überraschenderweise wurde nun gefunden, wie in den Ansprüchen beschrieben, dass sich durch die Verwendung von Polyesterpulver, welches aus einem aliphatischen Alkohol und einer aliphatischen Dicarbonsäure und gleichzeitig unter Verzicht auf einen aromatischen Monomerbausteins hergestellt wurde, in einem schichtweise arbeitenden Verfahren, bei welchem selektiv Bereiche der jeweiligen Pulverschicht aufgeschmolzen werden, trotz Verarbeitung bei niedrigen Temperaturen in der Baukammer eine sehr niedrige Viskosität des Polymeren ausgenutzt werden kann. Das schlägt sich nieder in hohen Bauteildichten, hoher Formtreue und gleichzeitig einfacher Verarbeitbarkeit und geringem Schwund.

Gegenstand der vorliegenden Erfindung ist daher die Verwendung von Polymerpulver in einem werkzeuglosen formgebenden Verfahren gemäß Anspruch 1, welches schichtweise arbeitet, und bei welchem selektiv Bereiche der jeweiligen Schicht aufgeschmolzen werden, welche dadurch gekennzeichnet ist, daß das Pulver zumindest einen Polyester aufweist, welcher aus einem zwei- oder mehrwertigen Alkohol und einer Dicarbonsäure und gleichzeitig unter Verzicht auf einen aromatischen Monomerbaustein hergestellt wurde. Bevorzugt wird als Monomerbaustein für das Polyesterpulver in der erfindungsgemäßen Verwendung ein Diol mit nicht mehr als 10 Kohlenstoffeinheiten, und besonders bevorzugt ein Diol mit nicht mehr als 6 Kohlenstoffeinheiten, und ganz besonders bevorzugt Butandiol, eingesetzt.
Weiterhin wird bevorzugt als Monomerbaustein für das Polyesterpulver in der erfindungsgemäßen Verwendung eine Disäure mit einer Anzahl von C-Atomen zwischen 4 und 18, besonders bevorzugt zwischen 4 und 12, und ganz besonders bevorzugt zwischen 6 bis 8.
Eine aromatische Struktur findet jedoch auf keinen Fall Verwendung bei der Herstellung des Polyesterpulvers.

Gegenstand der vorliegenden Erfindung sind außerdem Formkörper gemäß Anspruch 22, hergestellt durch ein schichtweise arbeitendes Verfahren, bei welchem selektiv die Bereiche der jeweiligen Schicht durch den Eintrag elektromagnetischer Energie aufgeschmolzen werden, welche dadurch gekennzeichnet sind, daß sie einen Polyester aufweisen, der aus einem zwei- oder mehrwertigen Alkohol und einer Dicarbonsäure und gleichzeitig unter Verzicht eines aromatischen Monomerbausteins hergestellt wurde.
Bevorzugt wird als Monomerbaustein für das Polyesterpulver in der erfindungsgemäßen Verwendung ein Diol mit nicht mehr als 10 Kohlenstoffeinheiten, und besonders bevorzugt ein Diol mit nicht mehr als 6 Kohlenstoffeinheiten, und ganz besonders bevorzugt Butandiol.
Weiterhin wird bevorzugt als Monomerbaustein für das Polyesterpulver in der erfindungsgemäßen Verwendung eine Disäure mit einer Anzahl von C-Atomen zwischen 4 und 18, besonders bevorzugt zwischen 4 und 12, und ganz besonders bevorzugt zwischen 6 bis 8.
Eine aromatische Struktur findet jedoch auf keinen Fall Verwendung bei der Herstellung des Polyesterpulvers
Das Polymerpulver sowie dessen erfindungsgemäße Verwendung wird nachfolgend beschrieben, ohne dass die Erfindung darauf beschränkt sein soll.

Die Verwendung des speziellen Polyesters im erfindungsgemäßen Verfahren findet überraschend eine Lücke zwischen den oben dargestellten konkurrierenden Eigenschaften. Standardpoly- oder -copolyester werden in der Regel aus zumindest einem aromatischen Monomer hergestellt. Die Verwendung von einem zwei- oder mehrwertigem Alkohol und einer Dicarbonsäure bei gleichzeitigem Verzicht auf eine aromatische Monomerkomponente führt zu einem Polyester mit sehr speziellen Eigenschaften. Ein Schmelzpunkt zwischen 60 und 150 °C und gleichzeitig eine hohe Kristallinität des Polyesters ist eine ungewöhnliche Eigenschaftskombination, die sich überraschend positiv auf den erfindungsgemäßen Prozeß auswirkt.

Es handelt sich um einen Polyester des Typs II, demzufolge hergestellt aus zumindest zwei verschiedenen Komponenten, nämlich einem mindestens zweiwertigen Alkohol und einer Dicarbonsäure. Der Polyester zur Verwendung im erfindungsgemäßen Verfahren wird durch Polykondensation eines zwei- oder mehrwertigen Alkohols und einer Disäure unter gleichzeitigem Verzicht auf einen aromatischen Monomerbaustein hergestellt. Bevorzugt liegen die beiden beschriebenen Komponenten Alkohol und Säure im Verhältnis 1:1 vor , bzw. im äquimolaren Verhältnis. Eine weitere vorteilhafte Ausführung besteht jedoch darin, eine der Komponenten im Überschuß einzusetzen, um die Funktionalität des Polyesters gezielt einzustellen. Es handelt sich damit um einen Homopolyester.

Der Alkohol kann dabei zwei- oder mehrwertig sein. Die Verwendung eines mehrwertigen Alkohols führt zu vernetzten Strukturen im Polyester. Die Hydroxigruppen im Monomerbaustein für den Alkohol können primär (endständig), sekundär, oder tertiär angeordent sein, bevorzugt primär oder sekundär; die Anordnung kann jedoch auch gemischt sein, beispielsweise aus einer oder zwei primären und einer oder mehreren sekundären Hydroxigruppen. Auch Isomerengemische seien hier ausdrücklich erwähnt. Bevorzugt wird als Monomerbaustein für den Alkohol für das Polyesterpulver in der erfindungsgemäßen Verwendung ein Diol mit nicht mehr als 10 Kohlenstoffeinheiten, und besonders bevorzugt ein Diol mit nicht mehr als 6 Kohlenstoffeinheiten, und ganz besonders bevorzugt Butandiol. Eine weitere Ausführung besteht in der Verwendung eines Polyglykols als Monomerbaustein für den Alkohol, bevorzugt mit einem Molekulargewicht zwischen 400 und 2000 g/mol (Gewichtsmittel), besonders bevorzugt zwischen 400 und 800 g/mol.
Die lineare gesättigte Disäure weist zwischen 4 und 18 C-Atomen in der Kette auf; bekannte Vertreter dieser Gruppe sind Malonsäure (Propandisäure), Bernsteinsäure (Butandisäure), Glutarsäure (Pentandisäure), Adipinsäure (Hexandisäure), Pimelinsäure (Heptandisäure), Azelainsäure (Nonandisäure), Sebazinsäure (Decandisäure), Dodecandisäure, Brassylsäure, Tetradecandisäure, Pentadecandisäure, Octadecandisäure. Für die Verwendung im erfindungsgemäßen Prozeß wird ein Polyester bevorzugt, welcher aus zumindest einem Diol und zumindest einer gesättigten Disäure mit einer Anzahl von 4 bis 12 C-Atomen in der Kette hergestellt wurde und keinen aromatischen Monomerbaustein aufweist. Für die Verwendung im erfindungsgemäßen Prozeß wird ganz besonders ein Polyester bevorzugt, welcher aus zumindest einem Diol und zumindest einer gesättigten Disäure mit einer Anzahl von 6 bis 8 C-Atomen in der Kette hergestellt wurde und keinen aromatischen Monomerbaustein aufweist. Auch funktionelle Derivate der Dicarbonsäuren, wie zum Beispiel Anhydride oder Chloride, sind eine Ausführungsmöglichkeit, um Polyester zur Verwendung im erfindungsgemäßen Verfahren herzustellen.

Die erfindungsgemäße Verwendung des Polyesterpulvers führt überraschend zu guten Prozeßeigenschaften und auch Bauteileigenschaften. Der oben beschriebene Kompromiß zwischen verschiedenen Zieleigenschaften wird umgangen, und man befindet sich in einem völlig neuen Prozeßbereich mit überraschenden Möglichkeiten, die im folgenden erläutert werden sollen. Die bei erfindungsgemäßem Verfahren verwendeten Polyester weisen bevorzugt MFR-Werte nach ISO 1133 (21,6N) zwischen 50 und 500 g/10 min auf, und besonders bevorzugt MFR-Werte nach ISO 1133 (21,6N) zwischen 100 und 300 g/10 min. Weiterhin weisen die bei erfindungsgemäßem Verfahren verwendeten Polyester bevorzugt einen Schmelzpunkt, ermittelt durch DSC (Differential scanning calorimetry) nach DIN 53765, zwischen 60 und 150 °C auf, bevorzugt zwischen 70 und 120 °C, und ganz besonders bevorzugt zwischen 60 und 100 °C. Bevorzugt wird beim Aufschmelzen im DSC ein Hauptpeak detektiert. Es handelt sich um hochkristalline Polyester. Die verschiedenen Parameter wurden mittels DSC (Differential Scanning Calorimetry) nach DIN 53765 bzw. nach AN-SAA 0663 bestimmt. Die Messungen wurden mit einem Perkin Elmer DSC 7 mit Stickstoff als Spülgas und einer Aufheizrate sowie Abkühlrate von 20 K/min durchgeführt. Der Messbereich betrug -90 bis +250 °C.

Die Viskosität ist so niedrig, daß sich ein sehr glatter Schmelzefilm in der Baukammer bei moderater Vorheizung bis knapp unter den Schmelzpunkt einstellt. Der gute Schmelzeverlauf führt zu Formkörpern, die in der Dichte nah an der Dichte von aus entsprechendem Material spritzgegossenen Bauteilen liegen. Die Kristallinität führt zu einer guten Abgrenzung zwischen den durch den selektiven Energieeintrag aufgeschmolzenen und den nicht aufgeschmolzenen Bereichen. Der Energieeintrag kann so auf den notwendigen Schmelzeverlauf abgestimmt werden, daß kein unerwünschtes "Wachsen" der Formkörper außerhalb der Sollkontur beispielsweise durch Wärmeleitung auftritt. Die Verwendung des Polyesterpulvers im erfindungsgemäßen Verfahren ist unproblematisch und läßt einen automatischen Ablauf ohne weiteres zu.

Die übrigen Parameter für eine optimierte Verarbeitung kann der Fachmann leicht herausfinden. So ist es beispielsweise vorteilhaft, weniger Energie je Volumeneinheit einzubringen, im Vergleich zu den derzeitigen Standardmaterialien PA11 und PA12.
Bei Verwendung eines Lasers kann dies durch schlichte Reduzierung der Laserleistung geschehen. Auch die Schichtdicke und die Dauer der Energieeinwirkung seien als Möglichkeit für eine Optimierung genannt, ohne daß die Möglichkeiten durch die beispielhafte Aufzählung limitiert werden sollen.

Die erfindungsgemäßen Formkörper, hergestellt nach einem erfindungsgemäßen Verfahren, weisen zudem eine weiße Eigenfarbe auf. Die Polyester zur Verwendung im erfindungsgemäßen Verfahren und die erfindungsgemäßen Formkörper sind biokompatibel, was einen weiteren Vorteil darstellt.

Die Polyester werden durch Polykondensation nach dem Stand der Technik hergestellt. Die Polyester-Granulate werden anschließend bei tiefen Temperaturen vermahlen, beispielsweise bei -30 °C auf einer Prall- oder Stiftmühle unter flüssigem Stickstoff, um pulverförmige Partikel zur Verwendung im erfindungsgemäßen Verfahren zu erhalten. Zumindest eine Schutzsiebung zur Entfernung der sehr groben Partikel sollte anschließend durchgeführt werden. Meist ist eine anschließende Fraktionierung sinnvoll. Bevorzugt liegen die Polyesterpulver im Kornband 0 - 150 mikron, bevorzugt 0 - 120 mikron. Die Kornverteilung verbleibt dabei relativ breit. Typische Werte für das Verhältnis D90/D10 1 : 2 bis 1 : 15, bevorzugt 1 : 3 bis 1 : 5. Eine mechanische Nachbearbeitung, beispielsweise in einem schnelllaufenden Mischer, zur Verrundung der beim Mahlen entstandenen scharfkantigen Partikel und damit zur besseren Auftragbarkeit dünnerer Schichten, kann ebenfalls sinnvoll sein. Die BET-Oberfläche liegt bei dem erfindungsgemäßen Polyesterpulver kleiner als 15 m²/g, bevorzugt kleiner als 10 m²/g und besonders bevorzugt kleiner als 5 m²/g. Der mittlere Korndurchmesser liegt bevorzugt zwischen 40 und 120 µm, bevorzugt zwischen 45 und 100 µm und besonders bevorzugt zwischen 50 und 70 µm.

Polyesterpulver zur Verwendung im erfindungsgemäßen Verfahren kann außerdem Hilfsstoffe und/oder Füllstoffe und/oder weitere organische oder anorganische Pigmente aufweisen. Solche Hilfsstoffe können z. B. Rieselhilfsmittel, wie z. B. gefällte und/oder pyrogene Kieselsäuren, sein. Gefällte Kieselsäuren werden zum Beispiel unter dem Produktnamen Aerosil, mit unterschiedlichen Spezifikationen, durch die Degussa AG angeboten. Vorzugsweise weist Polymerpulver weniger als 3 Gew.-%, vorzugsweise von 0,001 bis 2 Gew.-% und ganz besonders bevorzugt von 0,05 bis 1 Gew.-% solcher Hilfsstoffe, bezogen auf die Summe der vorhandenen Polymere, auf. Die Füllstoffe können z. B. Glas-, Metall- oder Keramikpartikel, wie z. B. Glaskugeln, Stahlkugeln oder Metallgrieß, oder Fremdpigmente, wie z. B. Übergangsmetalloxide, sein. Sie können auch hohl ausgebildet sein. Die Pigmente können beispielsweise Titandioxidpartikel basierend auf Rutil (bevorzugt) oder Anatas sein oder Rußpartikel. Auch die Verwendung von Carbonfasern, auch gemahlen, sei hier erwähnt.

Die Füllstoffpartikel weisen dabei vorzugsweise eine kleinere oder ungefähr gleich große mittlere Partikelgröße wie die Partikel des Polyesters auf. Vorzugsweise sollte die mittlere Partikelgröße d₅₀ der Füllstoffe die mittlere Partikelgröße d₅₀ des Polyester um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der Rapid-Prototyping/Rapid Manufacturing-Anlage.

Vorzugsweise weist Polymerpulver weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe, bezogen auf die Summe der vorhandenen Polyester, auf.

Beim Überschreiten der angegebenen Höchstgrenzen für Hilfs- und/oder Füllstoffe kann es je nach eingesetztem Füll- oder Hilfsstoff zu deutlichen Verschlechterungen der mechanischen Eigenschaften von Formkörpern kommen, die mittels solcher Polymerpulver hergestellt wurden.

Es ist ebenso möglich, herkömmliche Polymerpulver mit erfindungsgemäßen Polymerpulvern zu mischen. Auf diese Weise lassen sich Polymerpulver mit einer weiteren Kombination von Oberflächeneigenschaften herstellen. Das Verfahren zur Herstellung solcher Mischungen kann z. B. DE 34 41 708 entnommen werden.

Zur Verbesserung des Schmelzeverlaufs bei der Herstellung der Formkörper kann ein Verlaufsmittel, wie beispielsweise Metallseifen, bevorzugt Alkali- oder Erdalkalisalze der zugrunde liegenden Alkanmonocarbonsäuren oder Dimersäuren, dem Polymerpulver zugesetzt werden. Die Metallseifenpartikel können in die Polymerpartikel eingearbeitet werden, es können aber auch Mischungen von feinteiligen Metallseifenpartikeln und Polymerpartikeln vorliegen.

Die Metallseifen werden in Mengen von 0,01 bis 30 Gew.-%, vorzugsweise 0,5 bis 15 Gew.-%, bezogen auf die Summe der im Pulver vorhandenen Polymere, eingesetzt. Bevorzugt wurden als Metallseifen die Natrium- oder Calciumsalze der zugrunde liegenden Alkanmonocarbonsäuren oder Dimersäuren eingesetzt. Beispiele für kommerziell verfügbare Produkte sind Licomont NaV 101 oder Licomont CaV 102 der Firma Clariant.
Zur Verbesserung der Verarbeitungsfähigkeit oder zur weiteren Modifikation des Polymerpulvers können diesem anorganische Fremdpigmente, wie z. B. Übergangsmetalloxide, Stabilisatoren, wie z. B. Phenole, insbesondere sterisch gehinderte Phenole, Verlaufs- und Rieselhilfsmittel, wie z. B. pyrogene Kieselsäuren, sowie Füllstoffpartikel zugegeben werden. Vorzugsweise wird, bezogen auf das Gesamtgewicht an Polymeren im Polymerpulver, so viel dieser Stoffe den Polymeren zugegeben, dass die für das erfindungsgemäße Polymerpulver angegebenen Konzentrationen für Füll- und/oder Hilfsstoffe eingehalten werden.

Gegenstand der vorliegenden Erfindung sind Verfahren zur Herstellung von Formkörpern durch schichtweise arbeitende Verfahren, bei denen selektiv Bereiche der jeweiligen Schicht aufgeschmolzen werden, bei denen ein Polyesterpulver, welches dadurch gekennzeichnet ist, dass es aus einem zwei- oder mehr-wertigen Alkohol und zumindest einer Dicarbonsäure und gleichzeitig unter Verzicht auf einen aromatischen Monomerbaustein hergestellt wurde.
Bevorzugt wird als Monomerbaustein für das Polyesterpulver in der erfindungsgemäßen Verwendung ein Diol mit nicht mehr als 10 Kohlenstoffeinheiten, und besonders bevorzugt ein Diol mit nicht mehr als 6 Kohlenstoffeinheiten, und ganz besonders bevorzugt Butandiol.
Weiterhin wird bevorzugt als Monomerbaustein für das Polyesterpulver in der erfindungsgemäßen Verwendung eine Disäure mit einer Anzahl von C-Atomen zwischen 4 und 18, besonders bevorzugt zwischen 4 und 12, und ganz besonders bevorzugt zwischen 6 bis 8.
Eine aromatische Struktur findet jedoch auf keinen Fall Verwendung bei der Herstellung des Polyesterpulvers.

Die Energie wird durch elektromagnetische Strahlung eingebracht, und die Selektivität wird beispielsweise durch Masken, Auftragung von Inhibitoren, Absorbern, Suszeptoren oder aber durch eine Fokussierung der Strahlung, beispielsweise durch Laser, eingebracht. Die elektromagnetische Strahlung umfasst den Bereich von 100 nm bis 10 cm, bevorzugt zwischen 400 nm bis 10 600 nm oder zwischen 800 und 1 060 nm. Die Quelle der Strahlung kann beispielsweise ein Mikrowellengenerator, ein geeigneter Laser, ein Heizstrahler oder eine Lampe sein, aber auch Kombinationen davon. Nach dem Abkühlen aller Schichten kann der erfindungsgemäße Formkörper entnommen werden.

Die nachfolgenden Beispiele für solche Verfahren dienen der Erläuterung, ohne die Erfindung darauf beschränken zu wollen.

Die Lasersinterverfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinander folgende Versinterung von Schichten von Polymerpartikeln werden dreidimensionale Objekte hergestellt. Einzelheiten zum Verfahren des selektiven Laser-Sinterns sind z. B. den Schriften US 6 136 948 und WO 96/06881 zu entnehmen.

Andere gut geeignete Verfahren sind das SIV-Verfahren, wie es in WO 01/38061 beschrieben wird, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.

Die erfindungsgemäßen Formkörper, die durch ein schichtweise arbeitendes Verfahren, bei dem selektiv Bereiche aufgeschmolzen werden, hergestellt werden, zeichnen sich dadurch aus, dass sie zumindest einen Polyester, welcher aus einem zwei- oder mehrwertigen Alkohol und einer Dicarbonsäure und gleichzeitig unter Verzicht auf einen aromatischen Monomerbaustein hergestellt wurde, aufweisen. Bevorzugt wird als Monomerbaustein für das Polyesterpulver in dem erfindungsgemäßen Formkörper ein Diol mit nicht mehr als 10 Kohlenstoffeinheiten, und besonders bevorzugt ein Diol mit nicht mehr als 6 Kohlenstoffeinheiten, und ganz besonders bevorzugt Butandiol.
Weiterhin wird bevorzugt als Monomerbaustein für das Polyesterpulver in dem erfindungsgemäßen Formkörper eine Disäure mit einer Anzahl von C-Atomen zwischen 4 und 18, besonders bevorzugt zwischen 4 und 12, und ganz besonders bevorzugt zwischen 6 bis 8.
Eine aromatische Struktur findet jedoch auf keinen Fall Verwendung bei der Herstellung des Polyesterpulvers.

Die Formkörper können außerdem Füllstoffe und/oder Hilfsstoffe (hier gelten die Angaben wie für das Polymerpulver), wie z. B. thermische Stabilisatoren, wie z. B. sterisch gehinderte Phenolderivate, aufweisen. Füllstoffe können z. B. Glas-, Keramikpartikel und auch Metallpartikel, wie zum Beispiel Eisenkugeln, bzw. entsprechende Hohlkugeln sein. Bevorzugt weisen die erfindungsgemäßen Formkörper Glaspartikel, ganz besonders bevorzugt Glaskugeln auf. Vorzugsweise weisen erfindungsgemäße Formkörper weniger als 3 Gew.-%, besonders bevorzugt von 0,001 bis 2 Gew.-% und ganz besonders bevorzugt von 0,05 bis 1 Gew.-% solcher Hilfsstoffe, bezogen auf die Summe der vorhandenen Polymere, auf. Ebenso bevorzugt weisen erfindungsgemäße Formkörper weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe, bezogen auf die Summe der vorhandenen Polymere, auf.

Anwendungsgebiete für diese Formkörper sind sowohl im Rapid Prototyping als auch im Rapid Manufacturing zu sehen. Mit letzterem sind durchaus Kleinserien gemeint, also die Herstellung von mehr als einem gleichen Teil, bei dem aber die Produktion mittels eines Spritzgießwerkzeugs nicht wirtschaftlich ist. Beispiele hierfür sind Teile für hochwertige PKW, die nur in kleinen Stückzahlen hergestellt werden, oder Ersatzteile für den Motorsport, bei denen neben den kleinen Stückzahlen auch der Zeitpunkt der Verfügbarkeit eine Rolle spielt. Branchen, in die die erfindungsgemäßen Teile gehen, können die Luft- und Raumfahrtindustrie sein, die Medizintechnik, der Maschinenbau, der Automobilbau, die Sportindustrie, die Haushaltswarenindustrie, Elektroindustrie und Lifestyle.

Die folgenden Beispiele sollen das Polyesterpulver sowie dessen erfindungsgemäße Verwendung beschreiben, ohne die Erfindung auf die Beispiele einzuschränken.

Die Messwerte der Laserbeugung wurden mit dem Malvern Mastersizer S, Ver. 2.18, erhalten. Die Schüttdichte wurde mit einer Apparatur gemäß DIN 53 466 ermittelt. Die BET-Oberfläche wird durch Gasadsorption nach dem Prinzip von Brunauer, Emmet und Teller ermittelt; die herangezogene Norm ist die DIN ISO 9277.

### Vergleichsbeispiel 1

### Polyamid 12-Granulat

In einem 2-1-Rührautoklaven aus V4A-Stahl wurden 1 000 g Laurinlactam, 10,5 g 1,12 Dodecandisäure 445 g Wasser und 0,1 g 50-%ige wässrige hypophosphorige Säure auf 280 °C unter Eigendruck (ca. 22 bar) erhitzt und nach 5 Stunden innerhalb 3 Stunden auf Atmosphärendruck entspannt. Man leitete noch 2 Stunden Stickstoff über die Schmelze. Das Reaktionsprodukt wurde als Strang ausgetragen, granuliert und bei 70 °C getrocknet.

| | |
|---|---|
| Relative Lösungsviskosität: | 1,62 |
| Extraktgehalt: | 1,26 Gew.-% |
| Schmelzpunkt (DSC): | 177 °C |
| Schmelzenthalpie: | 77 J/g |
| COOH: | 119 mmol/kg |
| NH₂: | 6 mmol/kg |

400 g des Granulats wurden mit 2,6 I Ethanol 96-%ig, vergällt mit 2-Butanon in einem 5-I-Rührkessel, versehen mit Blattrührer, bei einer Rührerdrehzahl von 160 Upm bei 152 °C gelöst und 75 Minuten bei dieser Temperatur gehalten. Innerhalb von 40 Minuten kühlte man den Kesselinhalt auf 110 °C ab und hielt diese Temperatur 60 Minuten bei. Nach ca. 25 Minuten kam die Wärmeentwicklung, erkennbar an einer um 2K erhöhten Innentemperatur, zum Stillstand. Die Suspension wurde auf 75 °C abgekühlt und zur Trocknung (80 °C, 3 Stunden) in einen Schaufeltrockner überführt.

Man erhielt ein Pulver mit folgenden Eigenschaften:

| | |
|---|---|
| Schüttdichte: | 417 g/l |
| Korngrößenverteilung (d10/d50/d90): | 43 µm/66 µm/89 µm |
| Schmelztemperatur (DSC): | 186 °C |
| Schmelzenthalpie: | 119 J/g |
| BET-Oberfläche: | 6,8 m²/g |
| LL-Gehalt (GC): | 0,28 % |

### Beispiel 1

### Polyester aus Hexandiol und Adipinsäure 1:1

Es wird nach dem Stand der Technik ein Polyester aus äquimolaren Teilen Hexandiol und Adipinsäure hergestellt. Die Viskositätszahl nach DIN 53728 liegt bei 115 cm³/g, die Säurezahl nach DIN EN ISO 2114 bei 2 mg KOH/g, die Anzahl der Hydroxygruppen nach DIN 53 240-2 bei 1 mg KOH/g. Der Glasübergang findet sich bei -60 °C, der Schmelzpunkt bei 60 °C; beides wurde ermittelt nach DIN 53765. Der MFR-Wert mach DIN ISO 1133 (21,6N) beträgt 200 g/10min. Das Polyesterpulver wurde per Kaltvermahlung und anschließender Fraktionierung hergestellt. Das auf diesem Wege erhaltene Pulver wurde in einem Henschelmischer mit 0,1 Teilen Aerosil 200 versehen. Die Schüttdichte beträgt 472g/l. Die Kornverteilung wurde wie folgt ermittelt: d10=10µm,d50=60µm,d90=122µm.

### Beispiel 2

### Polyester aus Bernsteinsäure und Butandiol 1:1

Es wird ebenfalls nach dem Stand der Technik ein Polyester aus äquimolaren Teilen Butandiol und Bernsteinsäure hergestellt. Die Viskositätszahl nach DIN 53728 liegt bei 100 cm³/g. Der Glasübergang findet sich bei 35 °C, der Schmelzpunkt bei 115 °C; beides wurde ermittelt nach DIN 53765. Der MFR-Wert mach DIN ISO 1133 (21,6N) beträgt 200 g/10min. Das Polyesterpulver wurde per Kaltvermahlung und anschließender Schutzsiebung hergestellt. Das auf diesem Wege erhaltene Pulver wurde in einem Henschelmischer mit 0,1 Teilen Aerosil R812 versehen. Die Schüttdichte beträgt 455g/l. Die Kornverteilung wurde wie folgt ermittelt: d10 = 9 µm, d50 = 61 µm, d90 = 105 µm.

### Vergleichsbeispiel 2

### Copolyester aus 25 Teilen (42 Mol%) Terephthalsäure, 25 Teilen (58 Mol%) Isophtalsäure, 45 Teilen (100 Mol%)Butandiol, und 5 Teilen (11 Mol%) Polyethylenglykol

Es wird ebenfalls nach dem Stand der Technik aus oben aufgezeigten Komponenten hergestellt. Der Glasübergang findet sich bei 10 °C, der Schmelzpunkt bei 118 °C; beides wurde ermittelt nach DIN 53765. Der MFR-Wert mach DIN ISO 1133 (21,6N) beträgt 25 g/10min. Das Copolyesterpulver wurde per Kaltvermahlung und anschließender Schutzsiebung hergestellt. Das auf diesem Wege erhaltene Pulver wurde in einem Henschelmischer mit 0,1 Teilen Aerosil R812 versehen. Die Schüttdichte beträgt 430g/l. Die Kornverteilung wurde wie folgt ermittelt: d10 = 5 µm, d50 = 70 µm, d90 = 110 µm.

### Weiterverarbeitung und Test

Die Pulver aus den Beispielen wurden auf einer Laser-Sinter-Maschine zu Mehrzweckstäben nach ISO 3167 verbaut. An letzteren Bauteilen wurden mechanische Werte mittels Zugversuch nach EN ISO 527 ermittelt (Tabelle 1). Die Herstellung erfolgte jeweils auf einer Laser-Sinter-Maschine EOSINT P380 der Firma EOS GmbH. Die Schichtdicke betrug 0,15 mm. Die Dichte wurde nach einem vereinfachten internen Verfahren ermittelt. Dazu werden die hergestellten Zugstäbe nach ISO 3167 (multi purpose test specimen) vermessen und daraus das Volumen berechnet, das Gewicht der Zugstäbe bestimmt, und aus Volumen und Gewicht die Dichte berechnet. Der Schwund wurde durch die Differenz zwischen Soll- und Istmaßen des Formkörpers ermittelt. Die Bandbreite für die Verarbeitungstemperatur wurde bestimmt, in dem die Temperaturen in der Baukammer herangezogen wurden, in dem für die untere mögliche Bautemperatur gerade eben kein Verzug der bereits aufgeschmolzenen Bereiche zu erkennen war, für die obere Grenze der Verarbeitungstemperatur die Temperatur, bei der gerade noch keine Hautbildung auf der Pulveroberfläche zu erkennen war. Beispielhaft wurden diese Untersuchungen in einer Lasersintermaschine EOSINT P380 der Fa. EOS GmbH durchgeführt. Die Prozeßkammer wurde in den erfindungsgemäßem Beispielen nicht auf mehr als 150 °C temperiert.

**Tabelle 1: Ergebnisse der mechanischen Tests an den Formkörpern gemäß der Beispiele**

| **Beispiel** | **Verarbeitungstemperatur [°C]** | **Elastizitätsmodul [N/mm²]** | **Reißdehnung [%]** | **Dichte eines erfindungsgemäß hergestellten Bauteils bez. auf die Dichte des Polymeren** |
|---|---|---|---|---|
| Vergleichsbeispiel 1 (nicht erfindungsgemäß) | 180-184 | 1700 | 17 | 95 % |
| Beispiel 1 | 56 °C | 346 | 5,3 | 95 % |
| Beispiel 2 | 110 °C | 502 | 5,0 | 93 % |
| Vergleichsbeispiel 2 (nicht erfindungsgemäß) | 90 °C | 87 | 9,2 | 83 % |
| | | | | |
| 60 % Pulver aus Beispiel 2 und 40 % Glaskugeln (bezogen aufs Gewicht) | 111 °C | 980 | 3,7 | 92% |

Die Verarbeitungstemperaturen zur Erzeugung gleich dichter Bauteile liegen deutlich unterhalb der des zur Zeit standardmäßig erzeugten Polyamid 12. Auch die mechanischen Eigenschaften der Bauteile sind für den Einsatz im Rapid Prototyping sehr gut geeignet. Am Vergleichsbeispiel 2 ist zu erkennen, daß die einzelnen Pulverpartikel nur ansintern und sich unter Einwirkung der elektromagnetischen Energie nicht zu einem dichten Formteil miteinander verbinden. Insbesondere auf den Elastizitätsmodul, aber auch auf die anderen mechanischen Eigenschaften hat das negative Auswirkungen. Bei Dichten, die weniger als 90 % der Vergleichsdichten eines spritzgegossenen Bauteils betragen, ist meist die Festigkeit der Bauteile zu gering.

## Patentansprüche

1. Schichtweise arbeitendes Verfahren zur Herstellung von dreidimensionalen Bauteilen unter Verwendung von Pulver, bei dem selektiv Bereiche der jeweiligen Pulverschicht durch den Eintrag elektromagnetischer Energie aufgeschmolzen werden,
**dadurch gekennzeichnet,**
**dass** das Pulver zumindest einen Polyester, hergestellt durch Polykondensation eines zwei- oder mehrwertigen aliphatischen Alkohols und einer aliphatischen Disäure, aufweist.

2. Verfahren nach Anspruch 1,
**dadurch gekennzeichnet,**
**dass** ein Diol mit nicht mehr als 10 Kohlenstoffeinheiten verwendet wird.

3. Verfahren nach Anspruch 1,
**dadurch gekennzeichnet,**
**dass** ein Diol mit nicht mehr als 6 Kohlenstoffeinheiten verwendet wird.

4. Verfahren nach Anspruch 1,
**dadurch gekennzeichnet,**
**dass** ein Diol mit nicht mehr als 4 Kohlenstoffeinheiten verwendet wird.

5. Verfahren nach Anspruch 1,
**dadurch gekennzeichnet,**
**dass** das Pulver zumindest einen Polyester, hergestellt durch Polykondensation eines zumindest dreiwertigen Alkohols und einer Disäure aufweist.

6. Verfahren nach Anspruch 1,
**dadurch gekennzeichnet,**
**dass** eine Disäure mit einer Anzahl von Kohlenstoffatomen zwischen 4 und 18 verwendet wird.

7. Verfahren nach Anspruch 1,
**dadurch gekennzeichnet,**
**dass** eine Disäure mit einer Anzahl von Kohlenstoffatomen zwischen 4 und 12 verwendet wird.

8. Verfahren nach Anspruch 1,
**dadurch gekennzeichnet,**
**dass** eine Disäure mit einer Anzahl von Kohlenstoffatomen zwischen 6 und 8 verwendet wird.

9. Verfahren nach Anspruch 1,
**dadurch gekennzeichnet,**
**dass** die Disäure gesättigt ist.

10. Verfahren nach Anspruch 1,
**dadurch gekennzeichnet,**
**dass** das Pulver zumindest einen Polyester, hergestellt durch Polykondensation eines Polyglykols und einer Disäure aufweist.

11. Verfahren nach Anspruch 1,
**dadurch gekennzeichnet,**
**dass** die Selektivität durch die Auftragung von Suszeptoren, Inhibitoren, Absorbern oder durch Masken erzielt wird.

12. Verfahren nach Anspruch 1,
**dadurch gekennzeichnet,**
**dass** die Selektivität durch die Fokussierung eines Laserstrahls erzielt wird.

13. Verfahren nach mindestens einem der vorhergehenden Ansprüche,
**dadurch gekennzeichnet,**
**dass** das Pulver durch Vermahlung erhalten wurde.

14. Verfahren nach mindestens einem der vorhergehenden Ansprüche,
**dadurch gekennzeichnet,**
**dass** das Polyesterpulver einen MFR-Wert nach ISO 1133 zwischen 50 und 500 g/10min aufweist.

15. Verfahren nach mindestens einem der vorhergehenden Ansprüche,
**dadurch gekennzeichnet,**
**dass** das Polyesterpulver einen MFR-Wert nach ISO 1133 zwischen 100 und 300 g/10min aufweist

16. Verfahren nach mindestens einem der vorhergehenden Ansprüche,
**dadurch gekennzeichnet,**
**dass** das Polyesterpulver einen Schmelzpunkt nach DIN 53765 zwischen 60 und 150 °C aufweist

17. Verfahren nach mindestens einem der vorhergehenden Ansprüche,
**dadurch gekennzeichnet,**
**dass** das Polyesterpulver einen Schmelzpunkt nach DIN 53765 zwischen 60 und 120 °C aufweist.

18. Verfahren nach mindestens einem der vorhergehenden Ansprüche,
**dadurch gekennzeichnet,**
**dass** das Polyesterpulver einen Schmelzpunkt nach DIN 53765 zwischen 60 und 100 °C aufweist.

19. Verfahren nach mindestens einem der vorhergehenden Ansprüche,
**dadurch gekennzeichnet,**
**dass** das Polyesterpulver eine BET-Oberfläche kleiner als 15 m²/g aufweist.

20. Verfahren nach mindestens einem der vorhergehenden Ansprüche,
**dadurch gekennzeichnet,**
**dass** das Polyesterpulver eine BET-Oberfläche kleiner als 10 m²/g aufweist.

21. Verfahren nach mindestens einem der vorhergehenden Ansprüche,
**dadurch gekennzeichnet,**
**dass** das Polyesterpulver einen mittleren Korndurchmesser zwischen 40 und 120 zum aufweist.

22. Formkörper, hergestellt nach zumindest einem der Verfahren wie in den Ansprüchen 1 bis 21 beschrieben.

## Claims

1. Layer-by-layer process for production of three-dimensional components using powder, in which regions of the respective powder layer are selectively melted via input of electromagnetic energy,
**characterized in that**
the powder comprises at least one polyester prepared via polycondensation of a di- or polyhydric aliphatic alcohol and of an aliphatic diacid.

2. Process according to claim 1,
**characterized in that**
a diol having not more than 10 carbon units is used.

3. Process according to claim 1,
**characterized in that**
a diol having not more than 6 carbon units is used.

4. Process according to claim 1,
**characterized in that**
a diol having not more than 4 carbon units is used.

5. Process according to claim 1,
**characterized in that**
the powder comprises at least one polyester prepared via polycondensation of an at least trihydric alcohol and of a diacid.

6. Process according to claim 1,
**characterized in that**
a diacid having from 4 to 18 carbon atoms is used.

7. Process according to claim 1,
**characterized in that**
a diacid having from 4 to 12 carbon atoms is used.

8. Process according to claim 1,
**characterized in that**
a diacid having from 6 to 8 carbon atoms is used.

9. Process according to claim 1,
**characterized in that**
the diacid is a saturated diacid.

10. Process according to claim 1,
**characterized in that**
the powder comprises at least one polyester prepared via polycondensation of a polyglycol and of a diacid.

11. Process according to claim 1, **characterized in that** selectivity is achieved via application of susceptors, of inhibitors, or of absorbers, or via masks.

12. Process according to claim 1, **characterized in that** selectivity is achieved via focusing of a laser beam.

13. Process according to at least one of the preceding claims,
**characterized in that**
the powder was obtained via milling.

14. Process according to at least one of the preceding claims,
**characterized in that**
the MFR value of the polyester powder to ISO 1133 is from 50 to 500 g/10 min.

15. Process according to at least one of the preceding claims,
**characterized in that**
the MFR value of the polyester powder to ISO 1133 is from 100 to 300 g/10 min.

16. Process according to at least one of the preceding claims,
**characterized in that**
the melting point to DIN 53765 of the polyester powder is from 60 to 150°C.

17. Process according to at least one of the preceding claims,
**characterized in that**
the melting point to DIN 53765 of the polyester powder is from 60 to 120°C.

18. Process according to at least one of the preceding claims,
**characterized in that**
the melting point to DIN 53765 of the polyester powder is from 60 to 100°C.

19. Process according to at least one of the preceding claims,
**characterized in that**
the BET surface area of the polyester powder is smaller than 15 m²/g.

20. Process according to at least one of the preceding claims,
**characterized in that**
the BET surface area of the polyester powder is smaller than 10 m²/g.

21. Process according to at least one of the preceding claims,
**characterized in that**
the median grain diameter of the polyester powder is from 40 to 120 µm.

22. Molding produced according to at least one of the processes described in claims 1 to 21.

## Revendications

1. Procédé fonctionnant en couches pour la préparation d'éléments tridimensionnels avec utilisation de poudre, dans lequel des zones sélectives de chaque couche de poudre sont fondues par l'introduction d'une énergie électromagnétique, **caractérisé en ce que** la poudre présente au moins un polyester, préparé par polycondensation d'un alcool aliphatique divalent ou polyvalent et d'un diacide aliphatique.

2. Procédé selon la revendication 1, **caractérisé en ce qu'**on utilise un diol qui ne contient pas plus de 10 unités carbonées.

3. Procédé selon la revendication 1, **caractérisé en ce qu'**on utilise un diol qui ne contient pas plus de 6 unités carbonées.

4. Procédé selon la revendication 1, **caractérisé en ce qu'**on utilise un diol qui ne contient pas plus de 4 unités carbonées.

5. Procédé selon la revendication 1, **caractérisé en ce que** la poudre présente au moins un polyester, préparé par polycondensation d'un alcool au moins trivalent et d'un diacide.

6. Procédé selon la revendication 1, **caractérisé en ce qu'**on utilise un diacide présentant un nombre d'atomes de carbone entre 4 et 18.

7. Procédé selon la revendication 1, **caractérisé en ce qu'**on utilise un diacide présentant un nombre d'atomes de carbone entre 4 et 12.

8. Procédé selon la revendication 1, **caractérisé en ce qu'**on utilise un diacide présentant un nombre d'atomes de carbone entre 6 et 8.

9. Procédé selon la revendication 1, **caractérisé en ce que** le diacide est saturé.

10. Procédé selon la revendication 1, **caractérisé en ce que** la poudre présente au moins un polyester, préparé par polycondensation d'un polyglycol et d'un diacide.

11. Procédé selon la revendication 1, **caractérisé en ce que** la sélectivité est obtenue par l'application de suscepteurs, d'inhibiteurs, d'absorbants ou par des masques.

12. Procédé selon la revendication 1, **caractérisé en ce que** la sélectivité est obtenue par la focalisation d'un rayon laser.

13. Procédé selon au moins l'une quelconque des revendications précédentes, **caractérisé en ce que** la poudre a été obtenue par broyage.

14. Procédé selon au moins l'une quelconque des revendications précédentes, **caractérisé en ce que** la poudre de polyester présente une valeur MFR selon la norme ISO 1133 entre 50 et 500 g/10 min.

15. Procédé selon au moins l'une quelconque des revendications précédentes, **caractérisé en ce que** la poudre de polyester présente une valeur MFR selon la norme ISO 1133 entre 100 et 300 g/10 min.

16. Procédé selon au moins l'une quelconque des revendications précédentes, **caractérisé en ce que** la poudre de polyester présente un point de fusion selon la norme DIN 53765 entre 60 et 150°C.

17. Procédé selon au moins l'une quelconque des revendications précédentes, **caractérisé en ce que** la poudre de polyester présente un point de fusion selon la norme DIN 53765 entre 60 et 120°C.

18. Procédé selon au moins l'une quelconque des revendications précédentes, **caractérisé en ce que** la poudre de polyester présente un point de fusion selon la norme DIN 53765 entre 60 et 100°C.

19. Procédé selon au moins l'une quelconque des revendications précédentes, **caractérisé en ce que** la poudre de polyester présente une surface BET inférieure à 15 m²/g_{.}

20. Procédé selon au moins l'une quelconque des revendications précédentes, **caractérisé en ce que** la poudre de polyester présente une surface BET inférieure à 10 m²/g.

21. Procédé selon au moins l'une quelconque des revendications précédentes, **caractérisé en ce que** la poudre de polyester présente un diamètre moyen des particules entre 40 et 120 µm.

22. Corps façonnés préparés selon au moins l'un des procédés tels que décrits dans les revendications 1 à 21.
